# EUROPÄISCHE PATENTSCHRIFT

(11) **EP 3 453 596 B1**
(45) Veröffentlichungstag und Bekanntmachung des Hinweises auf die Patenterteilung: **04.08.2021**
(21) Anmeldenummer: 17190174.7
(22) Anmeldetag: 08.09.2017
(51) Int. Cl.: B62D 24/00, B62D 63/02

(54) **KABINE, SERVICEMOBIL UND VERFAHREN ZUR BEREITSTELLUNG EINES SERVICEMOBILS**
CABIN, SERVICE MOBILE AND METHOD FOR PROVIDING A SERVICE MOBILE
CABINE, VÉHICULE DE SERVICE ET PROCÉDÉ DE FOURNITURE D'UN VÉHICULE DE SERVICE

(43) Veröffentlichungstag der Anmeldung: 13.03.2019
(73) Patentinhaber: VOLKSWAGEN AKTIENGESELLSCHAFT, 38440 Wolfsburg (DE)
(72) Erfinder: HÖFLICH, Sebastian, 23570 Lübeck (DE); RÖMMELER, Volker, 38154 Lauingen am Elm (DE); WEHINGER, Jan, 38114 Braunschweig (DE)

(56) Entgegenhaltungen:
- EP-A1- 1 683 708
- CN-A- 104 908 829
- DE-A1-102013 004 837
- DE-A1-102014 100 505
- DE-A1-102016 209 099
- US-A1- 2013 241 236
- US-B1- 8 540 272

## Beschreibung

Die vorliegende Erfindung betrifft eine Kabine, ein Servicemobil sowie ein Verfahren zur Bereitstellung eines Servicemobils umfassend eine austauschbare Kabine. Insbesondere betrifft die vorliegende Erfindung eine flexible Hardware zur Bereitstellung während der Fahrt erbrachter Dienstleistungsfamilien und Dienstleistungen.

Die Fortentwicklung des Individualverkehrs schreitet derzeit rasch voran. Einerseits werden gemeinsam verwendete Fortbewegungsmittel (Car-Sharing, Pool-Fahrzeuge, etc.) immer stärker nachgefragt und professioneller angeboten. Andererseits schreitet auch die Automatisierung des Personenindividualverkehrs immer rascher voran, so dass die Insassen entsprechender Fahrzeuge die Reisezeit anderweitig nutzen können.

Dienstleistungen hingegen werden bis heute üblicherweise in stationären Einrichtungen (z.B. "Ladengeschäften") angeboten. Anbieter von stationären Dienstleistungen stehen bislang vor den Problemen, dass sie ausschließlich hohe Umsätze in teuren Toplagen erzielen können, die Skalierung schwierig ist, Mietverträge eine langfristige Ortsbindung bewirken und die Investitionskosten und das unternehmerische Risiko hoch sind.

Endkunden, welche die Dienstleistung gern erleben wollen, haben mitunter lange Fahrwege und hohe Kosten für die stationären Dienstleistungen auf sich zu nehmen. Folglich verbringt der Endkunde nicht nur die Fahrzeit zum Arbeitsplatz, sondern zusätzlich die Zeit zum jeweiligen Dienstleister (z.B. Restaurant, Anwalt, Behörde) im Fahrzeug. Aktuell verbringt ein Deutscher ca. 60 Min. pro Tag im Auto. Zudem können viele ältere Menschen nicht mehr fahren. Mit dem autonomen Fahren ist das wieder möglich.

Spartenspezifisch sind auch Ansätze bekannt, bei welchen die Dienstleistung zum Kunden kommt. Beispielsweise werden Frisierdienstleistungen zu Hause angeboten oder fahrende Einzelhändler (der "Eiermann") machen Station in Wohngegenden, um dort Waren abzusetzen.

Vereinzelt ist bereits die Erbringung von Dienstleistung für Fahrgäste bekannt. Beispielsweise können gastronomische Dienstleistungen in Zügen des Fernverkehrs in Anspruch genommen oder audiovisuelle Inhalte ("Bord-Kino") konsumiert werden.

DE 20 2015 106 556 U1 offenbart eine fahrbare Vorrichtung zur mobilen Bereitstellung unterschiedlicher Serviceleistungen in modularer Bauweise, umfassend eine Antriebseinheit, Energiespeichereinheit und/oder dazugehörige Elektronik. Ein austauschbares Servicemodul, welches beispielsweise ein Zapfhahnmodul, ein Kühlmodul, ein Eismodul oder eine Nassstrecke umfassen kann, ist reversibel über korrespondierende Arretierungspunkte mit einem Fahrgestell verbunden.

UBER nutzt mittlerweile Fahrradkuriere, um Essen direkt ins Fahrzeug zu liefern. So können zumindest die Ergebnisse gastronomischer Dienstleitungen bei minimalen Mehrkosten in herkömmlichen Fahrzeugen genossen werden. Die Fahrzeuge selbst hingegen sind nicht service-spezifisch ausgestaltet. Zudem wird die Dienstleistung nicht im Fahrzeug erbracht, sondern endet an der Fahrzeugtür mit der Übergabe des Essens.

www.luxurymobilebarbershop.com bietet einen mobilen Frisiersalon, bei welchem der Kunde den Ort der Dienstleistung (Bsp. Flughafen Parkplatz) definiert und der Fahrer den mobilen Friseursalon zu dem definierten Ziel fährt, um dort die Dienstleistung zu erbringen.

Mobile Dienstleistungen bieten bereits heute On-Demand Services besonders im Luxus-Segment an. Diese bieten ihren Endkunden Ortsunabhängigkeit, Zeitersparnis und Exklusivität, meist jedoch zu einem Preis, welcher für ein breites Publikum zu hoch ist. Mobile Dienstleistungen sind heute wegen hoher Investitionskosten und mangelnder Auslastung meist im Luxus-Segment zu finden. Gründe hierfür sind, dass das Fahrzeug zum Umbau gekauft werden muss, viel Handarbeit für den Umbau notwendig ist, wenige Standard-Bauteile zur Verfügung stehen, der Service-Anbieter lange Wege zwischen den Kunden zu fahren hat und schließlich das operative Management (Bezahlung, Buchung, Steuern) selbstständig zu übernehmen hat. Zudem sind umfangreiche Modifikationen von Fortbewegungsmitteln stets mit kostspieligen Einzelabnahmen der zuständigen Stellen verbunden.

CN 104 908 829 A offenbart ein Transportsystem mit einem Fahrgestell, welches mit Zellen (sog. Compartments) verbindbar ist.

Ausgehend vom vorgenannten Stand der Technik ist es eine Aufgabe der vorliegenden Erfindung, die Bereitstellung unterschiedlichster Dienstleistungsfamilien und

Dienstleistungen während der Fahrt eines Fortbewegungsmittels möglichst flexibel und die hierzu verwendete Hardware wiederverwendbar und kostengünstig konfigurierbar zu gestalten.

### Offenbarung der Erfindung

Die vorgenannte Aufgabe wird erfindungsgemäß durch die Gegenstände der unabhängigen Ansprüche gelöst. Die Unteransprüche zeigen bevorzugte Weiterbildungen der Erfindung.

Die Erfindung basiert auf dem Grundgedanken, dass die Konsumbereitschaft von Fahrgästen grundsätzlich höher ist, als wenn dieselbe Person frei verfügbare Zeit für den Konsum einer Dienstleistung aufwenden muss.

Um den Konsum von Dienstleistungen während der Fortbewegung besser auf die Anforderungen des Service-Erbringers und des Kunden anzupassen, fußt die vorliegende Erfindung beispielsweise auf dem Konzept, Fahrzeugplattformen mit allen für ein autonomes Fahren notwendigen technischen Einheiten, wie Fahrwerk, Antriebseinheit usw. bereitzustellen, welche bedarfsweise mit auf eine Dienstleistungserbringung während der Fahrt zugeschnittenen Fahrgastzellen verbindbar sind. Die Fahrgastzellen werden im Rahmen der vorliegenden Offenbarung als "CABs" bezeichnet. "CAB" steht für "Kabine" oder "Cabin".

Anders ausgedrückt ist eine CAB ein für einen spezifischen Service oder eine Servicegruppe angepasster Fahrzeugaufbau, der alle Schnittstellen bereithält, um die zur Dienstleistungserbringung erforderliche Einrichtung zu beherbergen und zu betreiben.

Die CAB kann daher als mechanische Einheit verstanden werden, welche als solche über vordefinierte Schnittstellen mit der Fahrzeugplattform/der Fahrlafette verbunden werden kann. Die Schnittstellen sorgen für eine mechanisch reversible, jedoch zuverlässige Verbindung zwischen der CAB und der Fahrlafette. Die Schnittstellen können zur Energieübertragung, insbesondere elektrischer Energie, zwischen der CAB und der Fahrlafette eingerichtet sein. Auch diese Schnittstellen sind reversibel ausgestaltet. Insbesondere können weitere Betriebsmittel (Flüssigkeiten), mechanische Energieübertragungsmittel, z.B. Wellen, Zahnräder, o.ä. für eine mechanische Energieübertragung von der Fahrlafette an die CAB, sowie Funkverbindungen und/oder eine datentechnische Verknüpfung zwischen der einzelnen CAB und der Fahrlafette sowie ihren Bausteinen vorgesehen sein. Für alle informationstechnischen Verknüpfungen der Fahrlafette mit der CAB bieten sich als Schnittstellen beispielsweise elektrische und/oder optische Leitungen, insbesondere Bussysteme, an.

Um eine kostengünstige, rasche und wenig fehleranfällige Konfiguration einer aus Fahrlafette und CAB bestehenden mobilen Einheit (auch "Servicemobil") zu ermöglichen, kann vorgesehen sein, dass sämtliche Schnittstellen zwischen der CAB und der Fahrlafette in im Wesentlichen identischer Richtung zueinander korrespondierend angeordnet sind. Mit anderen Worten kann eine CAB in einer ersten Richtung mechanisch mit der Fahrlafette in Eingriff gebracht werden, wobei beispielsweise Schienen für eine formschlüssige Verbindung zwischen CAB und Fahrlafette sorgen. Dieselbe Richtung kann für die energetische Verbindung zwischen der Fahrlafette und der CAB vorgesehen sein. Insbesondere kann sichergestellt werden, dass eine korrekte mechanische Verbindung zwischen der Fahrlafette und der CAB automatisch zu einer korrekten energetischen Verbindung der Fahrlafette mit der CAB führt. Entsprechendes kann für die Schnittstellen zur Betriebsmittelübertragung gelten. Sofern auch Daten zwischen der CAB und der Fahrlafette (z.B. bidirektional) auszutauschen sind, können beispielsweise leitungsvermittelnde Schnittstellen entsprechend angeordnet sein und bei der Verbindung zwischen der Fahrlafette und der CAB automatisch geschlossen werden. Zumindest können mehrere Schnittstellen, insbesondere wesensgleiche standardisierte Schnittstellen, räumlich zusammengefasst sein und reversibel, jedoch gegen ein unerwünschtes Lösen gesichert, an korrespondierenden Positionen an der Fahrlafette/der CAB angeordnet sein.

Durch die oben genannte Standardisierung können für die Erbringung von Dienstleistungen während der Fahr erforderliche Randbedingungen geschaffen werden, welche eine erhebliche Kostenreduzierung und einen bislang unerreichten Individualisierungsgrad von Fahrzeugen ermöglichen. Während die CABs den Dienstleistern vordefinierte Rahmen bieten, um ihre Dienstleistung sicher und anwendertauglich anzubieten, sorgt die Fahrlafette für effiziente, komfortable, rasche und zeitsparende Fortbewegung, insbesondere im Falle automatisch fahrfähiger Fahrlafetten. Hierdurch wird älteren oder fahruntüchtigen Personen sowie Kindern neben dem Reisen eine individuelle Dienstleistung geboten.

Das oben genannte Konzept aus Fahrlafette und CAB ermöglicht die Erbringung von individualisierten Dienstleistungen unterwegs, wobei das beschriebene Konzept die physische Plattform darstellt, welche in Verbindung mit einer digitalen Vermittlungsplattform (Server) potentiellen Kunden zugänglich gemacht wird. Die hier offenbarte Technologie beschreibt das Zusammenspiel der einzelnen Komponenten und Akteure in dem Plattform-Ökosystem. Es ermöglicht die freie Zeit, die durch das autonome Fahren bzw. Taxifahrten entsteht, optimal zu nutzen und zu monetarisieren.

In dem Plattform-Ökosystem werden Probleme verschiedener Akteure gelöst. Dabei ist zwischen Endkunden (nutzen Services während der Fahrt), Service-Anbietern (bieten Services während der Fahrt an wie z.B. Anwälte) und Microservice-Providern (stellen Bausteine zur Ausstattung der Fahrzeuge bereit) zu unterscheiden. Die Bausteine müssen nicht physisch sein, sondern könnten auch Software-Bausteine sein, z.B. eine Darstellung eines Restaurant-Menüs auf einem Display.

Die Vermittlung aus Fahrlafette und CAB bestehender Servicemobile kann beispielsweise über einen Server in Verbindung mit vom Kunden/Dienstleistungsanbieter verwendeten (mobilen) Drahtloskommunikationsendgeräten ("Anwenderendgerät") vorgenommen werden. Eine Applikation stellt hierbei die Schnittstelle zum Endkunden dar. Der Endkunde bucht über die Applikation die mobilen On-Demand-Services. Dazu definiert der Endnutzer Startpunkt, Ziel, Startzeit und Art der während der Fahrt zu erbringenden Dienstleistung. Endkunden können weitere Aufgaben über die Applikation erledigen wie z.B. Anfragen, Darstellungen der Suchergebnisse, Buchen, Bewerten sowie Bezahlvorgang.

Der Serviceanbieter kann ein eigenes Profil digital bereithalten, mittels dessen sich der Endnutzer über die angebotenen Services, Kundenmeinungen etc. informieren kann. Entscheidet sich der Endnutzer für den Bezug eines Services, wird seine Anfrage auf dem Anwenderendgerät des mobilen Serviceanbieters oder in dessen Fahrzeug angezeigt. Der Serviceanbieter kann die Anfrage akzeptieren, wodurch der kombinierte Beförderungs-/Dienstleistungsvertrag zustande kommt.

Im Rahmen der vorliegenden Offenbarung erbringbare Dienstleistungen lassen sich beispielsweise in die folgenden Ausprägungen/Kategorien gliedern:
- Die Dienstleistung kann von einem Menschen oder unbemannt erbracht werden (Friseur gegenüber Multimedia-Darbietung)
- individualisierte CAB oder Massenware (z.B. generisches Restaurant gegenüber systemgastronomischer Ausgestaltung).

Zusammengefasst umfasst die der vorliegenden Erfindung zugrundeliegende Fahrzeugarchitektur zwei Komponenten: Die zur Fortbewegung erforderliche Komponente wird als "Fahrlafette" bezeichnet, in welcher sich die Technik zum autonomen Fahren befinden kann. Zudem wird der Fahrzeugaufbau (CAB) verwendet, der alle Schnittstellen bereithält, um die zur Dienstleistungserbringung erforderliche Einrichtung zu beherbergen und zu betreiben. Die aus den vorgenannten Komponenten bestehenden Fahrzeuge/Fortbewegungsmittel werden auch als "Servicemobil" bezeichnet. Sie könnten auch als "physische Apps auf Rädern" bezeichnet werden, da sie hinsichtlich ihres Funktionsumfangs so vielfältig sind, wie durch Applikationen individualisierte SmartPhone-Plattformen.

Ausgehend vom Vorgenannten wird zur Erfüllung der Aufgabe eine Kabine vorgeschlagen, welche für ein Servicemobil mit einer Fahrlafette vorgesehen und zur reversiblen Verbindung mit der Fahrlafette ausgestaltet ist. Die Kabine wird im Rahmen der vorliegenden Erfindung als "CAB erster Ordnung" genannt. Die CAB erster Ordnung umfasst eine Ausstattung zur Erbringung einer ersten Dienstleistungsfamilie in dem Servicemobil während der Fahrt des Servicemobils. Die Ausstattung könnte auch als "Werkstatt" zur Erbringung der Dienstleistung verstanden werden. Mit anderen Worten wird Hardware in die CAB integriert, welche für die erste Dienstleistungsfamilie erforderliche oder zumindest geeignete Bestandteile umfasst. Die Dienstleistungsfamilie kann als Oberbegriff für eine Vielzahl miteinander verwandter bzw. in thematischem Bezug zueinander stehender Dienstleistungen verstanden werden. Damit ist die Ausstattung spezifisch genug, um die erste Dienstleistungsfamilie von weiteren Dienstleistungsfamilien zu unterscheiden. Hingegen ist die Ausstattung nicht notwendigerweise spezifisch genug, um sämtliche Dienstleistungen der ersten Dienstleistungsfamilie zu erbringen. Die CAB erster Ordnung ist mit einer vordefinierten ersten Schnittstelle zur reversiblen mechanischen Befestigung der CAB an der Fahrlafette ausgestattet. Die erste Schnittstelle kann beispielsweise ein Schienensystem und/oder ein Hakensystem aufweisen. Insbesondere kann eine crashsichere Verbindung zwischen der Fahrlafette und der ersten CAB mittels der ersten Schnittstelle bereitgestellt werden. Hierzu kann die erste Schnittstelle mit einer Schnittstelle der Fahrlafette korrespondieren und zur temporären mechanischen, insbesondere formschlüssigen, Verbindung ausgestaltet sein. Um das Servicemobil für die Erbringung einer ersten Dienstleistung der ersten Dienstleistungsfamilie einzurichten, ist eine vordefinierte zweite Schnittstelle zur reversiblen mechanischen Befestigung der CAB erster Ordnung an einer zweiten Kabine (nachfolgend CAB zweiter Ordnung genannt) vorgesehen, welche eine Ausstattung zur Erbringung der ersten Dienstleistung der ersten Dienstleistungsfamilie in dem Servicemobil während der Fahrt des Servicemobils bereitstellt. Die erste Dienstleistung kann als Untergruppe bzw. Konkretisierung der ersten Dienstleistungsfamilie verstanden werden. Die Ausstattung der CAB zweiter Ordnung kann daher gegenüber der Ausstattung der CAB erster Ordnung eine spezifischere Ausgestaltung aufweisen. An einem nicht einschränkenden Beispiel sei dieser Zusammenhang kurz veranschaulicht: Wird die erste Dienstleistungsfamilie als "gastronomische Dienstleistung' bzw. "Zubereitung von Speisen" verstanden, so kann die Ausstattung der CAB erster Ordnung beispielsweise eine Kochgelegenheit aufweisen, mittels welcher Töpfe und Pfannen sämtlicher Art verwendet werden können. Um eine derartige Dienstleistungsfamilie zur Zubereitung frittierter Speisen zu konkretisieren, ist eine leistungsstarke und vordefinierten Anforderungen gerecht werdende Absaugung erforderlich, welche beispielsweise als Ausstattung der CAB zweiter Ordnung bereitgestellt werden kann. Die Absaugung kann beispielsweise an einem Dachhimmel der CAB zweiter Ordnung angeordnet sein und derartig platziert sein, dass im Servicemobil die Absaugung der CAB zweiter Ordnung oberhalb der Kochgelegenheit der CAB erster Ordnung angeordnet ist. Sofern beispielsweise eine alternative Dienstleistung der ersten Dienstleistungsfamilie erbracht werden soll (z.B. Zubereitung von Sushi), kann mit der Kochgelegenheit zwar heißes Wasser für die Zubereitung von Tee zubereitet werden, eine CAB zweiter Ordnung könnte die Dienstleistungserbringung jedoch durch Integration eines Reiskochers (für dessen Betrieb keine Absaugung erforderlich ist) unterstützen. Die an der CAB erster Ordnung vorgesehene erste Schnittstelle sowie die an der CAB erster Ordnung vorgesehene zweite Schnittstelle ermöglichen in Verbindung miteinander somit eine räumliche Festlegung der CAB zweiter Ordnung gegenüber der Fahrlafette des Servicemobils. Hierzu befinden sich die erste Schnittstelle und die zweite Schnittstelle jeweils an der CAB erster Ordnung. Sie sind fest miteinander verbunden und können insbesondere in räumlicher Nähe zueinander angeordnet sein, um eine feste, crashsichere und verbindungssteife Befestigungsmöglichkeit bereitzustellen. Durch das vorgenannte Konzept der "verschachtelten" CABs kann ein Servicemobil flexibel und kostengünstig an eine konkret zu erbringende Dienstleistung angepasst werden. Je allgemeiner die Stufe der CABs ist (CAB erster Ordnung hat eine allgemeinere Stufe als eine CAB zweiter Ordnung, eine CAB zweiter Ordnung hat eine allgemeinere Stufe als eine CAB dritter Ordnung usw.), desto höher sind die Stückzahlen für die allgemeineren CABs und desto geringer sind die Umfänge, welche die CABs konkreterer Stufen aufweisen müssen. Einerseits wird hierdurch die Möglichkeit der Bereitstellung eines Servicemobils kostengünstiger, da die Stückzahlen der mitunter kostspieligen Ausstattungen für Dienstleistungsfamilien günstigere Einkaufspreise und einen höheren Automatisierungsgrad bei der Montage ermöglichen. Andererseits wird eine Individualisierung bzw. ein Wechsel einer Ausrichtung des Servicemobils auf eine spezifische Dienstleistung kostengünstiger und kurzfristiger möglich. Auch ein paralleles Anbieten unterschiedlicher Dienstleistungen einer gemeinsamen Dienstleistungsfamilie durch einen einzigen Anbieter wird durch Anschaffung zweiter entsprechender CABs zweiter Ordnung und lediglich einer Fahrlafette sowie einer CAB erster Ordnung möglich.

Die Unteransprüche zeigen bevorzugte Weiterbildungen der Erfindung.

Die erste Schnittstelle und/oder die zweite Schnittstelle müssen nicht auf eine mechanische Verbindung der CAB erster Ordnung mit der CAB zweiter Ordnung mit der Fahrlafette beschränkt sein. Auch können eine Energieübertragung, eine Übertragung von Betriebsmitteln, eine Informationsübertragung und/oder eine Entsorgung von Abwasser, Abluft etc. über die zweite Schnittstelle zwischen der CAB erster Ordnung und der CAB zweiter Ordnung bzw. über die erste Schnittstelle zwischen der CAB erster Ordnung und der Fahrlafette bewerkstelligt werden. Eine Verbindung der unterschiedlichen Schnittstellen zwischen der CAB erster Ordnung und der CAB zweiter Ordnung kann beispielsweise in im Wesentlichen identischer Richtung erfolgen. Mit anderen Worten wird beim Zusammenführen der CAB erster Ordnung und der CAB zweiter Ordnung eine räumliche Nähe der korrespondierenden Bestandteile der jeweiligen Schnittstelle geschaffen, so dass eine automatische oder zumindest aufwandsarme Verbindung der Schnittstellenpartner ermöglicht wird. Ist beispielsweise die CAB erster Ordnung bereits mit der Fahrlafette verbunden, kann bei geeigneter Anordnung der CAB zweiter Ordnung die Fahrlafette selbsttätig (automobil) an die CAB zweiter Ordnung heranfahren, um die zweite Schnittstelle mit einer korrespondierenden Schnittstelle der CAB zweiter Ordnung automatisch zu verbinden. Mitunter hat lediglich eine Überprüfung der ordnungsgemäßen Verbindung durch einen Servicemitarbeiter, den Dienstleister oder eine andere Person zu erfolgen, um den ordnungsgemäßen Betrieb des Servicemobils sicherzustellen. Die Ausstattung, welche die CAB erster Ordnung und/oder die CAB zweiter Ordnung aufweist, kann eine dienstleistungsfamilienspezifische bzw. dienstleistungsspezifische Ausstattung sein. Beispielsweise können entsprechende Werkzeuge (z.B. Schere, Hobel, Feile etc.) oder Gerätschaften (z.B. Licht, Kasse, Wasseranschluss, Abwasseranschluss, Abluft etc.) zur Verfügung gestellt werden. Entsprechend können auch Möbel (z.B. ein Behandlungsstuhl, eine Liege, ein Esstisch, ein Teppich o.ä.) die Ausstattung der CABs darstellen oder ergänzen. Als weiteres Beispiel seien Betriebsmittel (z.B. Flüssigkeiten, Kühlmittel, Energiespeicher etc.) genannt, welche innerhalb einer jeweiligen CAB bereitgestellt und/oder über eine der Schnittstellen zwischen der CAB erster Ordnung und der CAB zweiter Ordnung CAB-übergreifend verwendet werden können.

Die CAB erster Ordnung kann als mechanischer Verbund verstanden werden. Mit anderen Worten kann eine Fahrgastzelle zumindest anteilig aus der CAB erster Ordnung bestehen. Die Fahrgastzelle kann eine eigenständige Kennung aufweisen, welche sie gegenüber anderen Fahrgastzellen, insbesondere derselben Ordnung, eindeutig maschinenlesbar identifizierbar macht. Dies stellt einen gravierenden Unterschied gegenüber herkömmlichen Fahrzeugen dar, welche lediglich eine Fahrgestellnummer aufweisen, welche im Rahmen der vorliegenden Erfindung einer maschinenlesbaren Kennzeichnung der Fahrlafette entsprechen würde. Die Kennzeichnung der CAB erster Ordnung wird durch die eindeutig maschinenlesbare Kennung eine unabhängig von der Fahrlafette handelbare bzw. verkehrsfähige austauschbare Einheit. Sie kann beispielsweise in einem elektronischen System einen zugeordneten Datensatz aufweisen, welcher den Zeitpunkt der Herstellung, die Eigentümerschaft, die Art/Ausrichtung der Dienstleistungsfamilie bzw. Dienstleistung und andere Eigenschaften und Informationen kennzeichnet. Entsprechende Kennungen können für jede CAB einer spezielleren Ordnung ebenfalls vorgesehen sein, wodurch eine zu erstellende Einheit (nämlich das Servicemobil) durch Kombination der Kennungen vordefiniert werden kann. Dies kann beispielsweise in einer Applikation erfolgen. Mit anderen Worten kann eine softwaretechnische Zuordnung bzw. Kombination einer Fahrlafette, einer CAB erster Ordnung, einer CAB zweiter Ordnung etc. anhand der maschinenlesbaren Kennzeichnungen erfolgen, um eine im Wesentlichen automatische Kombination eines gewünschten Servicemobils zu veranlassen.

Eine Dienstleistungsfamilie kann beispielsweise eine Hygienedienstleistung, insbesondere betreffend eine menschliche Körperhygiene, umfassen. Alternativ oder zusätzlich kann eine kosmetische Behandlung eines Körpers eines Anwenders als erfindungsgemäße Dienstleistungsfamilie verstanden werden. Entsprechendes gilt für eine Wellness-Behandlung des Anwenders und ähnliche oder artfremde Dienstleistungsbereiche, zu welchen eine wirtschaftlich sinnvolle Dienstleistungsvielzahl besteht.

Die Dienstleistung kann beispielsweise eine Bräunung eines Anwenders umfassen, welche beispielsweise durch die Bestrahlung mit UV-Strahlung oder durch Bereitstellung einer Bräunungsdusche erfolgen kann. Auch das Wärmen des Anwenders (z.B. an kalten Wintertagen) durch Infrarot-Bestrahlung o.ä. kann als Dienstleistung einer kosmetischen Behandlung oder einer Wellness-Behandlung als Dienstleistungsfamilie verstanden werden. Alternativ oder zusätzlich kann die Dienstleistung ein Duschen, ein Augenbrauenzupfen, ein Frisieren oder eine Nagelpflege eines Anwenders umfassen.

Gemäß einem zweiten Aspekt der vorliegenden Erfindung wird ein Servicemobil vorgeschlagen, welches eine CAB erster Ordnung und eine CAB zweiter Ordnung aufweist. Die CAB erster Ordnung und die CAB zweiter Ordnung sind über die vordefinierte erste Schnittstelle der CAB erster Ordnung zumindest mechanisch miteinander verbunden. Die CAB zweiter Ordnung weist hierzu ihrerseits eine vordefinierte dritte Schnittstelle auf, welche zur Verbindung mit der zweiten Schnittstelle der CAB erster Ordnung eingerichtet ist. Entsprechend den obigen Ausführungen kann die CAB zweiter Ordnung ihrerseits eine vierte Schnittstelle aufweisen, mittels welcher eine CAB dritter Ordnung in das Servicemobil integriert werden kann. Selbstverständlich gelten die oben gemachten Ausführungen zur CAB erster Ordnung auch für das erfindungsgemäße Servicemobil, so dass zur Vermeidung von Wiederholungen auf die obigen Ausführungen verwiesen wird. Die CAB zweiter Ordnung kann beispielsweise eine Öffnung aufweisen, an welcher Oberflächenbereiche der CAB erster Ordnung angeordnet sind, sobald das Servicemobil zusammengesetzt ist. Alternativ kann die CAB zweiter Ordnung eine im Wesentlichen zumindest annähernd vollständig geschlossene Oberfläche aufweisen, so dass Oberflächenbereiche der CAB erster Ordnung im Servicemobil für den Anwender nicht zugänglich sind. Während im ersten Fall die Ausstattungsmerkmale der CAB erster Ordnung zur Erbringung der Dienstleistungsfamilie unmittelbar vom Anwender zugegriffen werden können, ist bei einer geschlossenen Oberfläche der CAB zweiter Ordnung eine besonders kostengünstige Ausgestaltung und Fertigung der CAB erster Ordnung möglich. Zudem ist ein höherer Individualisierungsgrad durch Variation der CAB zweiter Ordnung möglich.

Die CAB zweiter Ordnung kann beispielsweise eingerichtet sein, das Servicemobil barrierefrei ("behindertengerecht") bereitstellen zu können. Hierzu kann die CAB zweiter Ordnung beispielsweise eine Rollstuhlrampe und/oder eine Befestigung für den Rollstuhl aufweisen. Sofern der Rollstuhl einen elektrischen Antrieb aufweist, kann die CAB zweiter Ordnung eine Ladestation für den Rollstuhl bzw. dessen Energiespeicher aufweisen. Die hierzu bereitzustellende elektrische Energie kann beispielsweise über die Schnittstellen von der Fahrlafette, insbesondere durch einen Traktionsenergiespeicher der Fahrlafette, bereitgestellt werden.

Gemäß einem dritten Aspekt der vorliegenden Erfindung wird ein Verfahren zur Bereitstellung eines Servicemobils vorgeschlagen. Das Verfahren umfasst in einem ersten Schritt ein Ermitteln eines Bedarfes zur Erbringung einer Dienstleistung während einer Fahrt. Hierzu kann beispielsweise eine digitale To-Do-Liste ausgelesen und bei der Bestellung des Servicemobils berücksichtigt werden. Mit anderen Worten wird ermittelt, dass ein Anwender eines durch das Servicemobil zu erbringenden Services bedarf. Im Ansprechen auf den ermittelten Bedarf wird eine Kabine (nachfolgend "CAB erster Ordnung" genannt) identifiziert, welche zur Erbringung einer Dienstleistungsfamilie, welcher die Dienstleistung angehört, eingerichtet ist. Mit anderen Worten wird zunächst sichergestellt, dass die Grundausstattung für die zu erbringende Dienstleistung im Servicemobil vorhanden ist. Anschließend kann das Servicemobil durch temporäres Verbinden der CAB erster Ordnung mit einer Fahrlafette bereitgestellt werden. Beispielsweise kann hierzu ein automatisches Verbinden der Fahrlafette mit der CAB erster Ordnung erfolgen. Im Rahmen der vorliegenden Erfindung kann die Fahrlafette als autonom fahrfähig angenommen werden. Durch die elektronische Ermittlung des Bedarfes zur Erbringung der Dienstleistung kann somit eine Wirkkette angestoßen werden, welche zur hochautomatisierten oder gar vollständig automatisierten Bereitstellung des Servicemobils beim Anwender führt. Zur erfindungsgemäßen Konkretisierung des Servicemobils kann auch eine zweite Kabine (nachfolgend "CAB zweiter Ordnung" genannt) identifiziert werden, welche eigens zur Erbringung der vom Anwender nachgefragten bzw. benötigen Dienstleistung eingerichtet ist. Die CAB zweiter Ordnung weist somit der Dienstleistung zugeordnete Ausstattungsmerkmale auf, über welche die Dienstleistung professionell, effizient und effektiv erfolgen kann. Die Bereitstellung des Servicemobils umfassend die CAB zweiter Ordnung kann wie oben beschrieben durch temporäres Verbinden der CAB zweiter Ordnung mit der CAB erster Ordnung erfolgen, wobei die CAB erster Ordnung mit der Fahrlafette verbunden wird. Der Konfigurationsprozess des Servicemobils kann zunächst ein logisches Verknüpfen der CAB erster Ordnung und der CAB zweiter Ordnung bedingen. Mit anderen Worten wird der Bedarf des Anwenders an einer Dienstleistung dahingehend konkretisiert, dass eine erforderliche CAB zweiter Ordnung mit einer geeigneten CAB erster Ordnung logisch verknüpft wird. Hierzu kann die jeweilige Verfügbarkeit in elektronischer Form überprüft und die zur Verfügung stehenden CABs reserviert werden. Zusätzlich sind die CAB erster Ordnung und die CAB zweiter Ordnung einander (insbesondere automatisch) anzunähern. Auf diese Weise wird eine Erstellung des bedarfsgerechten Servicemobils vorbereitet. Alternativ oder zusätzlich wird die CAB zweiter Ordnung automatisch in der CAB erster Ordnung angeordnet. Dieser Schritt kann vor oder nach einem Anordnen der CAB erster Ordnung auf bzw. an der Fahrlafette erfolgen. Entsprechendes gilt für eine CAB dritter Ordnung, eine CAB vierter Ordnung usw. Ein derartig erfindungsgemäß ausgestaltetes Servicemobil gleicht sozusagen einer Matrojoschka. Hierbei definiert die oberste Stufe die Bandbreite der Ausgestaltung der darunterliegenden Stufen. Eine CAB erster Ordnung definiert den Gestaltungsspielraum der CAB zweiter Ordnung. Die Kombination der CAB erster Ordnung und der CAB zweiter Ordnung definiert den Gestaltungsspielraum der CAB dritter Ordnung usw.

Ein Verzicht auf Zwischenstufen (CABs einer bestimmten Stufe) bei der Gestaltung von Servicemobilen könnte dazu führen, dass jeweils ein vollständiges Neudesign eines Servicemobils auf Basis eines leeren Fahrzeuginnenraums für jedes neue Servicemobil notwendig wäre. Dies wurde zum folgenden Problem führen: In der Entwicklung/Produktion/ Verwertung würden umfassende Entwicklungskosten und Erprobungskosten für jedes einzelne Servicemobil anfallen. Die verursachten Kosten müssten an die Dienstleistungserbringer und von diesen an die Endkunden weitergereicht werden. Eine breite Kundschaft für die Dienstleistungen setzt jedoch wettbewerbsfähige Preise voraus. Die Anforderungen einer Dienstleistung an die verwendeten Ausstattungsmerkmale/Bausteine (z.B. Widerstandsfähigkeit gegenüber Schmutz und Wasser) müssen bei jeder CAB bzw. bei jedem Servicemobil neu definiert, ausgelegt und erprobt werden. Zudem müsste jedes Servicemobil separat in Form einer Einzelabnahme von den entsprechenden Stellen eine Straßenzulassung erhalten. Entsprechendes gilt für Zusatzeigenschaften, welche z.B. eine barrierefreie Bereitstellung eines Servicemobils ermöglichen. In der Praxis ist zudem zu erwarten, dass die Gestaltungsfreiräume potentielle Dienstleistungsanbieter derart überfordern würden bzw. fahrzeugspezifische Kenntnisse voraussetzen würden, dass diese vom Vorhaben einer mobilen Dienstleistungserbringung überwiegend grundsätzlich absehen würden. Die hierarchische Gliederung der Fahrzeugausstattungen ermöglicht eine fachkenntnisspezifische Ausgestaltung der CAB-Stufen. Je näher die Ordnung einer CAB der Fahrlafette ist, desto stärker überwiegt das Erfordernis an automotivespezifischen Kenntnissen bei der Auslegung. Je näher man der höchstgelegenen CAB-Stufe kommt, desto wichtiger sind die Kenntnisse des Dienstleistungserbringers bzw. die Individualisierung der Ausstattung zur Bereitstellung einer überzeugenden Dienstleistung. Jeder Fachmann in der vorgenannten Hierarchie kann sich also um diejenige Stufe kümmern, in welcher er mit seinem Fachwissen die besten Ergebnisse erzielen kann. Somit können Skaleneffekte eine wirtschaftlich interessante Bereitstellung einer Dienstleistung während der Fahrt ermöglichen.

Nachfolgend werden unterschiedliche Aspekte der vorliegenden Erfindung ohne einschränkenden Charakter genannt, welche mögliche Ausgestaltungen und Kombinationen von Merkmalen erfindungsgemäß aufgebauter Servicemobile veranschaulichen:
Folgende Liste zeigt die Komponenten "Fahrlafette" und "CAB" und die logische Verknüpfung der einzelnen CAB-Stufen. Eine CAB-Stufe umfasst Komponenten als auch Schnittstellen, die die Bandbreite der Ausgestaltung der darunter liegenden CAB-Stufen beeinflusst.

### Fahrlafette

(1) Fahrlafette: Standardisiertes Fahrmodul
   CAB: Individualisierter Fahrzeugaufbau (Beispiel)
(2) CAB-Stufe 1 Menschlicher Transport (Mensch/Kein Mensch)
(3) CAB-Stufe 2 Mitarbeiter (Mitarbeiter/Kein Mitarbeiter)
(4) CAB-Stufe 3 Service-Cluster (Beratung, Wellness, Restaurant)
(5) CAB-Stufe 4 Service-Art (Maniküre, Pediküre, Friseur)
(6) CAB-Stufe 5 Service-Design (Maniküre Design 1, Maniküre Design 2, Maniküre Design 3)
(7) CAB-Stufe 6 Label (Logo 1, Logo 2, Logo 3)

Die Fahrlafette ist das standardisierte Fahrmodul eines Servicemobils. Die Fahrlafette vereint Funktionen, welche in allen Servicemobilen notwendig sind.

Die CAB-Stufe 1 definiert das Chassis des Servicemobiles. Dieses wird insbesondere durch die Entscheidung Mensch/Kein Mensch im Fahrzeug geprägt.

Die CAB-Stufe 1.2 definiert, welche Einschränkungen eines Menschen (z.B. Rollstuhlgerecht) die CAB berücksichtigt.

CAB-Stufe 2 definiert, ob ein Service-Mitarbeiter sich für den Service im Servicemobil befinden muss oder nicht. Daraus ergeben sich die spezifischen Anforderungen insbesondere an die Raumgestaltung eines Servicemobils.

CAB-Stufe 3 definiert das Service-Cluster. Ein Servicecluster beschreibt eine Gruppe oder Familie an Services, deren Anforderungen an das Servicemobil eine hohe Ähnlichkeit besitzen und damit geclustert werden können. Das jeweilige Service-Cluster definiert einzelne Komponenten und Schnittstellen für die darunter liegenden Service-Arten.

CAB-Stufe 4 definiert die Art des Services. Eine Service-Art beschreibt einen konkreten Service. Im Fokus stehen die Anforderungen an die einzelnen servicespezifischen Komponenten, die im Service-Design ausgewählt werden.

CAB-Stufe 5 definiert die service-spezifischen Komponenten. Sie beruhen auf den zuvor definierten Anforderungen.

CAB-Stufe 6 ergänzt das Service-Design mit markenspezifischen Komponenten. Hierzu zählen Logos, Farben, Sprüche. Sie beeinflussen nicht die Funktionsweise des Servicemobils. Neben physischen Labels sind digitale Labels zu nennen, die auf den für den Service genutzten Bildschirmen und Bedienelementen angezeigt werden.

Neben den einzelnen CAB-Stufen sind einzelne technische Systeme zur Verwaltung und Nutzung dieser zu nennen.

### Servicemobil Datenbank

- Die designten Servicemobile sind in einer Datenbank beschrieben.
- Die Servicemobil Datenbank umfasst die in einem Servicemobil verwendeten CAB-Stufen.

### CAB-Stufen Datenbank

- beschreibt die einzelnen CAB-Stufen in einer Datenbank
- beschreibt die Komponenten der einzelnen Ausprägungen einer CAB-Stufe
- beschreibt die Schnittstellen der einzelnen Ausprägung einer CAB-Stufe zu einer untergeordneten CAB-Stufe (Bandbreite)
- beschreibt die Schnittstellen einer ganzen CAB-Stufe zu einer übergeordneten CAB-Stufe (Bandbreite)

Das System der CAB-Stufen unterstützt einerseits bei der Suche/Buchung eines Services (Booking-Engine) und anderseits bei der Widerverwendung der Servicemobile (Wiederverwendung-Engine).

### Booking-Engine

- Filtert die dem Kunden anzubieten Services für eine Route auf Basis durch den Kunden definierter Anforderungen an das Servicemobil (z.B. Rollstuhlgerecht)
- Abgleich der Filterangaben des Kunden mit den Eigenschaften der CAB-Stufen des einzelnen Servicemobils
- Kalkulation des nächstbesten Servicemoduls auf Basis der Nähe des nachgefragten Services und dem zur Verfügung stehenden Servicemobils (Beispiel: Suche nach Pediküre: Rollstuhlgerecht, Vorschlag: Maniküre Rollstuhlgerecht)
- Unterscheidung zwischen Muss-, Kann- und Wunsch-Kriterien bei dem Vorschlagen von ähnlichen Services

### Wiederverwertung-Engine

- Auf Basis der CAB-Stufen Eigenschaften eines zurückgegeben Servicemoduls und den Eigenschaften der zu bauenden Service-Modulen wird deren Ähnlichkeit bestimmt
- Bei einer hohen Übereinstimmung wird das Servicemobil direkt verwertet, ohne es zuvor in seine Einzelteile zu zerlegen.

Die Fahrlafette ist das standardisierte Fahrmodul eines Servicemobils. Die Fahrlafette vereint Funktionen, welche in allen Servicemobilen notwendig sind. Dazu zählen alle Komponenten, die für die Fahrfunktion notwendig ist. (Bei einem durch einen Fahrer gesteuerten Fahrzeug umfasst die Fahrlafette weiter ein Fahrerhäuschen). Weiter umfasst die Fahrlafette die zentrale Rechen- und Kommunikationseinheit des Servicemobils. Mit ihren Schnittstellen formuliert diese den Aufbau der CAB-Stufe 1.

CAB-Stufe 1 definiert den Rahmen des Servicemoduls und beschreibt die Grundrahmenbedingungen des Fahrzeuges (Mensch/Kein Mensch).

Zu den möglichen CAB 1 zählen: Transport von Menschen oder technische Dienstleistung (wie 3D-Druck).

Die CAB-Stufe 1 - Mensch ist als Fahrzeug-Chassis zu verstehen, welches die Grundfunktionen zum Menschen-Transport und die damit notwendigen Komponenten wie Insassen-Schutz umfasst. Weiter umfasst die CAB-Stufe 1 mit der Ausprägung Mensch weitere Schnittstellen für die darunter liegenden CAB Stufen (z.B. Schnittstelle zu einer Rollstuhl-Rampe).

CAB-Stufe 1.2 definiert, welche Einschränkungen eines Menschen das Servicemobil berücksichtigt.

Wenn beispielsweise ein Servicemobil rollstuhlfahrergerecht sein soll, muss dieses eine Rampe und eine Vorrichtung zur Sicherung des Rollstuhls während der Fahrt umfassen. Die Schnittstellen hierzu werden von der CAB-Stufe 1 mit der Ausprägung Mensch bereitgestellt.

CAB-Stufe 2 definiert, ob ein Service-Mitarbeiter sich für den Service im Servicemobil befinden muss oder nicht. Daraus ergeben sich die spezifischen Anforderungen an ein Servicemobil. Die CAB-Stufe 2 untergliedert den Raum des Servicemobils in einen Service-Erbringungsraum und einen Rückzugsraum für den Service-Mitarbeiter (Bereich für persönliche Gegenstande, ggf. Toilette).

CAB-Stufe 3 definiert das Servicecluster. Ein Service-Cluster beschreibt eine Gruppe oder Familie an Services, deren Anforderungen an das Service-Mobil eine hohe Ähnlichkeit besitzen und damit geclustert werden können. Das jeweilige Service-Cluster definiert einzelne Komponenten und Schnittstellen für die darunter liegenden Service-Arten.

Servicecluster in der Hierarchie CAB-Stufe 1 (Mensch), CAB-Stufe 1.2 (Keine Einschränkungen), CAB-Stufe 2 (Servicemitarbeiter) lauten unter anderem "Beratung", "Wellness" und "Vertrieb". Eine CAB-Stufe 3 eines Service-Clusters Wellness umfasst beispielsweise eine Komponente Wassertank, dessen Schnittstelle in der CAB-Stufe 4.

Service-Art entweder für ein Waschbecken, eine Spülmaschine oder eine Waschmaschine verwendet werden kann. Darüber hinaus werden hier die Anforderungen der an die Schnittstelle angebundenen Komponenten beschrieben. Hier ist zum Beispiel die Anforderung nach IP67 einer Komponente in einer Feuchtzelle zu nennen.

Service-Arten in der Hierarchie CAP-Stufe 1 (Mensch), CAB-Stufe 1.2 (Keine Einschränkungen). CAB-Stufe 2 (Servicemitarbeiter), CAB-Stufe 3 (Wellness) lauten beispielsweise Maniküre, Pediküre oder Friseur.

Eine CAB 4 einer Service-Art Maniküre definiert den Aufbau des Fahrzeuginnenraums bestehend aus: Stuhl Kosmetikerin, Stuhl Kundin, Tisch zwischen beiden und Vorrichtungen für Lampen. Weiter stellt sie die Anforderungen an die einzelnen Komponenten durch Schnittstellen und Abmaße. Für den Tisch gilt beispielsweise, dass dieser die Abmaße von 60cmX60cmX90cm haben muss und an einem spezifischen Punkt mit einer definierten Vorrichtung zu befestigen ist. Hinzu kommen Anforderungen an das Material.

CAB-Stufe 5 definiert das für den Kunden erlebbare Servicedesign. Das Servicedesign definiert die servicespezifischen Komponenten auf Basis der in den vorherigen CAB-Stufen definierten Anforderungen.

Das Servicedesign wählt beispielsweise einen Stuhl, Tisch oder Lampe unter Berücksichtigung der Anforderungen an diese Komponente aus der CAB-Stufe 4 aus.

CAB-Stufe 6 ergänzt das Service-Design mit markenspezifischen Komponenten. Hierzu zählen Logos, Farben, Sprüche. Sie beeinflussen nicht die Funktionsweise des Servicemobils. Neben physischen Labels sind digitale Labels zu nennen, die auf den für den Service genutzten Bildschirmen und Bediengeraten wie iPads angezeigt werden.

Als Beispiel sind aufzuklebende Logos zu nennen. Hinzu kommen digitale Individualisierungen wie zum Beispiel die Darstellung des Service-Anbieter Logos in der Service Service-Karte (Digitales Label).

### Servicemobile bei Buchungsanfrage filtern

Bei einer Buchungsanfrage kann der Kunde die dargestellten Servicemobile nach Kriterien filtern. Diese Kriterien werden anhand der Eigenschaften der einzelnen CAB-Stufen definiert. Bei einer Suchanfrage kann der Kunde beispielsweise die Anforderung "rollstuhlgerecht" auswählen. Auf Basis dessen werden ausschließlich die Services mit Servicemobilen mit der CAB-Stufe 1.2 Rollstuhlrecht dargestellt. Die Servicemobile sind mit ihren CAB-Stufen in einer Servicemobil-Datenbank beschrieben. Diese Datenbank ist wiederum mit der CAB-Stufen Datenbank verknüpft, die die Details zu den CAB-Stufen enthält.

### Ähnliche Servicemobile vorschlagen

Neben dem Filtern können auf Basis der Ähnlichkeit zweier Servicemobile in Hinblick auf ihre verwendeten CAB-Stufen Vorschläge für ein anderes Servicemobil generiert werden. Dabei kann weiter zwischen Muss-, Kann- und Wunsch-Kriterien unterschieden werden. Bei einer Anfrage nach einer rollstuhlgerechten Maniküre bewertet das System rollstuhlgerecht als Muss-Kriterium und die Maniküre als Kann-Kriterium. Falls ein rollstuhlgerechtes Maniküre-Servicemobil nicht zur Verfügung steht, könnte folglich eine rollstuhlgerechte Pediküre vorgeschlagen werden.

### Servicemobil-Verwertung anhand CAB-Stufen Ähnlichkeit

Servicemobile werden gemietet. Nach der Rückgabe des Servicemobiles werden die einzelnen CAB-Stufen getrennt und können in anderen Servicemobilen wiederverwendet werden.

Auf Basis der CAB-Stufen eines zurückgegebenen Servicemobils wird gemessen, bis zu welcher CAB-Stufe ein zurückgegebenes CAB mit einem zu bauenden Servicemobil übereinstimmt. Bei einer Übereinstimmung bis zur CAB-Stufe 5 (Service-Design) kann das vollständige Servicemobil verwertet werden. Es müssen ausschließlich die Logos geändert werden.

### Kurzbeschreibung der Zeichnung

Nachfolgend werden Ausführungsbeispiele der vorliegenden Erfindung anhand der beigefügten Zeichnungen im Detail beschrieben. In den Zeichnungen ist:
- Figur 1: eine Prinzipskizze veranschaulichend im Rahmen der vorliegenden Erfindung verwendbare Ausführungsbeispiele für CABs in Verbindung mit einer Fahrlafette, um ein Servicemobil zur Realisierung der vorliegenden Erfindung zu erzielen;
- Figur 2: eine schematische Darstellung eines Plattform-Ökosystems zur Veranschaulichung von Informationsflüssen bei der Realisierung der vorliegenden Erfindung;
- Figur 3: eine schematische Darstellung einer Fahrlafette, zweier CABs und ihrer gegenseitigen Schnittstellen gemäß einem Ausführungsbeispiel der hier offenbarten Technologie;
- Figur 4: eine schematische Darstellung eines Servicemobils, welches aus einer Fahrlafette, einer CAB erster Ordnung und einer CAB zweiter Ordnung zusammengesetzt ist; und
- Figur 5: ein Flussdiagramm veranschaulichend Schritte eines Ausführungsbeispiels eines erfindungsgemäßen Verfahrens zur Bereitstellung eines Servicemobils.

### Ausführungsformen der Erfindung

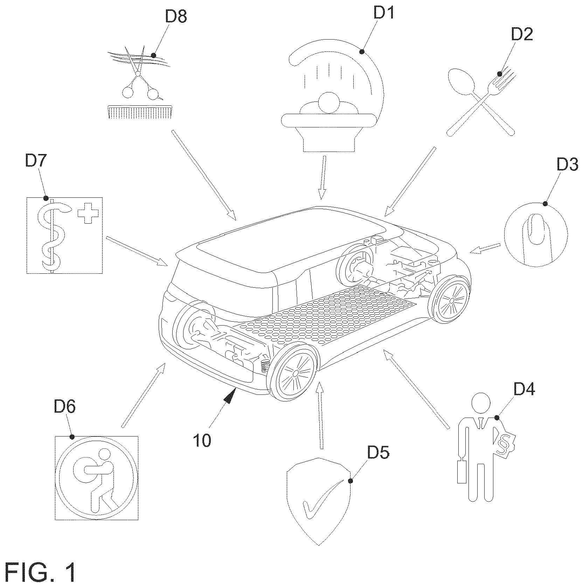

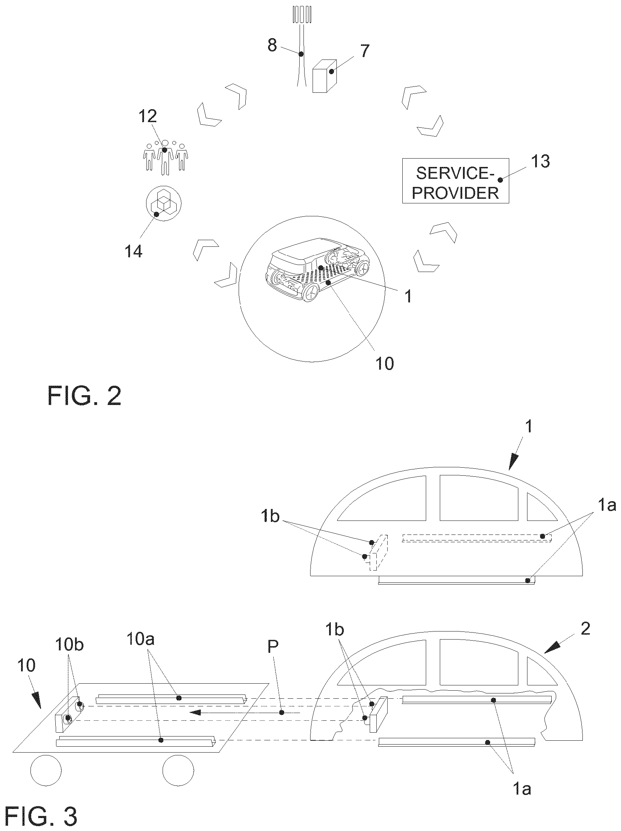

Figur 1 zeigt eine schematische Darstellung einer Fahrlafette 10 eines Servicemobils gemäß einem Ausführungsbeispiel der hier offenbarten Technologie. Die Fahrlafette bringt dabei sämtliche Merkmale mit, welche für die Fortbewegung, insbesondere die automatische Fortbewegung, erforderlich sind. Lediglich beispielhaft seien das Fahrwerk, der Antriebsstrang, der Energiespeicher, Längs-/Querführungslogik und -einrichtungen, Außenbeleuchtung, etc. Im Rahmen der vorliegend offenbarten Technologie werden (nicht dargestellte) CABs verwendet, um die Fahrlafette zur Erbringung einer jeweiligen Dienstleistung D1 bis D8 spezifisch einzurichten. Beispielsweise kann eine Bestrahlungs- und/oder Bräunungseinrichtung D1 in Form einer CAB mit der Fahrlafette 10 verbunden werden, um die Dienstleistung "Bräunung" anbieten zu können. Beispielsweise können eine UV-Bestrahlungseinheit und/oder eine Bräunungsdusche enthalten sein. Um gastronomische Dienstleistungen D2 erbringen zu können, kann eine Restaurant-CAB mit der Fahrlafette 10 verbunden werden. Die Zubereitung von Speisen und der Verzehr derselben kann durch die Einrichtung der CAB ermöglicht werden. Eine Kosmetik- bzw. Nagelpflege-Dienstleistung D3 kann beispielsweise erfordern, dass die CAB besondere Werkbänke, eine Absauganlage zum raschen Austausch der Innenraumluft und besonders helle Beleuchtungseinrichtungen (sog. Spots) aufweist. Zur Erbringung von Rechtsberatungsdienstleistungen D4 können eine Bibliothek und/oder mindestens zwei Sitzgelegenheiten in einer entsprechend ausgestalteten CAB vorgesehen sein. Entsprechendes gilt für eine Versicherungsberatungs-Dienstleistung bzw. Finanzberatungs-Dienstleistung D5. Insbesondere können hierbei Video-Konferenz-Hardware und ein großer Bildschirm zur Darstellung von Grafiken und anderen Präsentationsinhalten vorgesehen sein. Auch Reha-Dienstleistungen D6 und ärztliche Dienstleistungen D7 können durch die Ausgestaltung einer jeweiligen CAB bestmöglich unterstützt werden. Beispielsweise können Untersuchungs- und/oder Trainingsgeräte Bestandteile entsprechender CABs sein. Um Frisierdienstleistungen D8 bereitstellen zu können, kann beispielsweise ein Waschbecken, wie es in Friseursalons zum Haarwäschen üblich ist, ein 230V-Stecker zum Betreiben eines Haartrockners, ein großer Spiegel und ein höhenverstellbarer Frisierstuhl vorgesehen sein. Die vorgenannten CABs können über reversible mechanische Schnittstellen mechanisch fest und crash-sicher mit der Fahrlafette 10 verbunden werden. Um Energie- und Informationsflüsse zwischen der Fahrlafette 10 und der CAB zu gewährleisten, werden in Verbindung mit Figur 3 detailliert dargestellte reversible Schnittstellen vorgeschlagen.

Figur 2 zeigt eine schematische Darstellung eines Plattform-Ökosystems zur Veranschaulichung von Informationsflüssen bei der Realisierung der vorliegend offenbarten Technologie. Ein Micro-Service-Provider 14 stellt Komponenten und Bausteine zur Verfügung, welche zur Individualisierung der CAB 1 der Servicemobile vorgesehen sind. Diese Komponenten und Bausteine können beispielsweise dienstleistungsfamilienspezifische bzw. dienstleistungsspezifische Funktionen aufweisen und/oder eine Anbieterspezifische Gestalt aufweisen, um den Wiedererkennungswert des Anwenders beim Kunden zu erhöhen. Anschließend werden die Komponenten und Bausteine in einer Werkstatt in die CAB 1 eingebaut und die CAB 1 kann mit einer jeweiligen Fahrlafette 10 (temporär oder dauerhaft) verbunden und als Servicemobil von einem Serviceprovider 13 bereitgestellt werden. Die Vermittlung der Servicemobile wird von einer Vermittlungsplattform übernommen, welche über einen Server 7 und beispielsweise einen Funkturm 8 eines Drahtloskommunikationsnetzwerkes den Bedarf der Anwender 12 ermittelt und mit den angebotenen Servicemobilen abgleicht. Bestmögliche Kombinationen aus angebotenem Servicemobil und interessiertem Anwender 12 führen zum einzelnen Vertragsabschluss über die Bereitstellung von Mobilitätsdienstleistung und einer CAB-spezifischen Dienstleistung. Somit ergeben sich unterschiedliche Konstellationen zum Design, zur Erstellung und zur Verwendung der CABs bei der Dienstleistungserbringung vor dem Endkunden.

Figur 3 zeigt eine prinzipielle, perspektivische Skizze zur temporären Verbindung einer Fahrlafette 10 mit einer ersten CAB 1 oder einer zweiten CAB 2. Korrespondierend zueinander ausgestattete mechanische Schnittstellen 10a auf der Fahrlafette 10 und mechanische Schnittstellen 1a in den CABs 1, 2 sorgen für eine rasche und crash-sichere Verbindung zwischen CAB 1, 2 und Fahrlafette 10. Sofern Informationen und/oder Energie von der CAB 1, 2 zur Fahrlafette 10 oder anders herum ausgetauscht werden sollen, werden zusätzliche, zueinander korrespondierende Schnittstellen 1b, 10b an den CABs 1, 2 und der Fahrlafette 10 angeordnet, welche ebenfalls in Richtung eines Pfeils P miteinander in Eingriff gebracht werden. Alternativ oder zusätzlich können in entsprechender Weise weitere oder alternative Schnittstellen zwischen den CABs 1, 2 und der Fahrlafette 10 miteinander in Eingriff gebracht werden. Beispielsweise können eine Heiz-/Kühlleistung, eine hydraulische Energie, Druckluft, etc., zwischen den CABs 1, 2 und der Fahrlafette 10 ausgetauscht werden. Die Schnittstellen können Informationstechnisch überwacht werden, so dass erst bei einer ordnungsgemäßen Kontaktierung der jeweiligen Schnittstellen und insbesondere einer entsprechenden Verriegelung der Schnittstellen eine Verwendung/Fahrt des Servicemobils ermöglicht wird. Während die dargestellten mechanischen Schnittstellen 10a der Fahrlafette 1 mit U- bzw. Schienenprofile ausgestaltet sind, welche mit beispielhaft dargestellten T-Profilen als Schnittstellen 1a der CABs 1, 2 in Eingriff gebracht werden können, versteht es sich von selbst, dass andere mechanische Schnittstellen möglich sind, welche gegebenenfalls in einer anderen Richtung als derjenigen des dargestellten Pfeils P miteinander in Eingriff zu bringen sind. Sofern die CABs 1, 2 jedoch aufgebockt in geeigneter Höhe gelagert werden können, kann die Fahrlafette 10 wie dargestellt selbsttätig unter die CAB 2 fahren, wobei die Schnittstellen 1b, 1a, 10b, 10a miteinander in Eingriff gebracht werden, ohne dass eine aufwendige Hebevorrichtung o.ä. erforderlich ist. Gegebenenfalls kann ein Luftfahrwerk der Fahrlafette 10 verwendet werden, um eine geringfügige Höhenanpassung vorzunehmen. Während im Rahmen der vorliegend offenbarten Technologie eine CAB nicht notwendiger Weise als Fahrgastzelle mit dienstleistungsspezifischer Inneneinrichtung verstanden werden muss, stellt dies eine geeignete Ausgestaltung der vorliegend offenbarten Technologie dar. Alternativ kann die CAB im Sinne der vorliegend offenbarten Technologie einen lediglich temporären Bestandteil der (integral mit der Fahrlafette 10 gefertigten) Fahrgastzelle darstellen. Bei dieser Ausgestaltung können die in Figur 3 dargestellten Schnittstellen (oder andere geeignete Schnittstellen) zwischen der CAB und der Fahrgastzelle angeordnet sein. Die Schnittstellen können beispielsweise am Dach und/oder in den Seitenwänden und/oder im Boden der CAB sowie der Fahrgastzelle angeordnet sein.

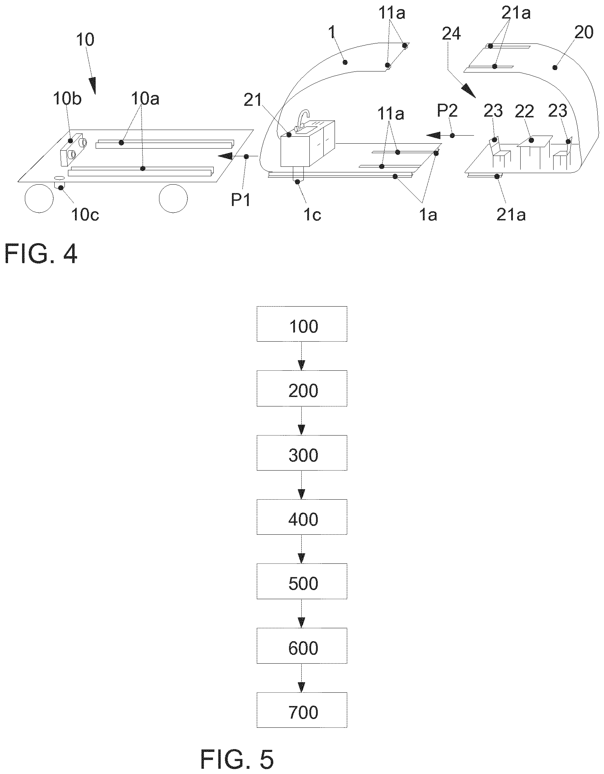

Figur 4 zeigt eine schematische Darstellung einer Fahrlafette 10, welche entsprechend der Fahrlafette 10 in Figur 2 ausgestaltet ist. Zusätzlich weist die in Figur 4 dargestellte Fahrlafette 10 eine Schnittstelle 10c zur Abfuhr von Abwasser auf, welches aus einer korrespondierenden Schnittstelle in Form eines Abwasserrohrs 1c der CAB erster Ordnung 1 aus einem Spültisch 21 als dienstleistungsfamilienspezifische Ausstattung abzuführen ist. Die CAB erster Ordnung 1 weist an ihrem Unterboden entsprechend Figur 2 erste Schnittstellen 1a auf, mittels welcher sie an der Fahrlafette 10 mechanisch festgelegt wird. Nach erfolgreicher Festlegung korrespondiert das Abwasserrohr 1c mit der Schnittstelle 10c der Fahrlafette 10. Die CAB erster Ordnung 1 dient der Dienstleistungsfamilie "Zubereitung von Speisen und Getränken". Um das Servicemobil für die Bereitstellung eines mobilen Restaurants einzurichten, ist eine CAB zweiter Ordnung 20 vorgesehen, welche zwei Stühle 23 und einen Tisch 22 als dienstleistungsspezifische Ausstattungsmerkmale aufweist. Zur reversiblen mechanischen Verbindung mit der CAB erster Ordnung 1 weist die CAB zweiter Ordnung 20 Schienen 21a an ihrer Unterseite sowie an ihrer Oberseite auf, welche als dritte Schnittstellen mit den Schienen 11a als zweite Schnittstellen der CAB erster Ordnung 1 korrespondieren. Sofern die CAB zweiter Ordnung 20 in geeigneter Höhe gelagert wird, kann eine mit der CAB erster Ordnung 1 ausgestattete Fahrlafette 10 selbsttätig für eine mechanische Verbindung der Schienen 11a, 21a sorgen, wobei die jeweilige Verbindung der Bestandteile in Richtung der Pfeile P1, P2 erfolgt. Hierbei wird eine Öffnung 24 der CAB zweiter Ordnung 20 derart innerhalb der CAB erster Ordnung 1 angeordnet, dass Oberflächenbereiche umfassend den Spültisch 21 für die Insassen des Servicemobils zugänglich verbleiben.

Figur 5 zeigt Schritte eines Ausführungsbeispiels eines erfindungsgemäßen Verfahrens zur Bereitstellung eines Servicemobils. In Schritt 100 wird ein Bedarf zur Erbringung einer Dienstleistung während einer Fahrt des Servicemobils automatisch ermittelt. Hierzu kann ein digital von einem Anwender geführter Kalender und/oder eine digitale To-Do-Liste (Aufgabenliste), insbesondere automatisch, ausgelesen werden. In Schritt 200 wird eine CAB erster Ordnung für das Servicemobil identifiziert, welche eigens zur Erbringung einer Dienstleistungsfamilie, welcher die Dienstleistung angehört, eingerichtet ist. In Schritt 300 wird zusätzlich eine CAB zweiter Ordnung identifiziert, welche eigens zur Erbringung der Dienstleistung eingerichtet ist. Mit anderen Worten korrespondiert die CAB zweiter Ordnung zur CAB erster Ordnung, wie die Dienstleistung zur Dienstleistungsfamilie korrespondiert. In Schritt 400 wird daher die CAB erster Ordnung mit der CAB zweiter Ordnung logisch verknüpft. Dies kann ein automatisches Auslesen bzw. ein Abfragen einer Identifikation der CAB erster Ordnung und/oder der CAB zweiter Ordnung umfassen. In Schritt 500 wird die CAB erster Ordnung an die CAB zweiter Ordnung automatisch angenähert. Anschließend wird die CAB zweiter Ordnung in Schritt 600 automatisch in der CAB erster Ordnung angeordnet. Zu guter Letzt wird das Servicemobil umfassend eine Fahrlafette, die CAB erster Ordnung und die CAB zweiter Ordnung in Schritt 700 dem Anwender bereitgestellt.

Die erfindungsgemäße Verbindung der Fahrlafette mit einer CAB erster Ordnung und/oder der CAB erster Ordnung mit einer CAB zweiter Ordnung kann optional im Ansprechen auf das Ermitteln eines Vorliegens eines Anwenderwunsches erfolgen. Alternativ oder zusätzlich können erfindungsgemäß ausgestaltete Servicemobile nach der erfindungsgemäßen Bereitstellung wiederholtermaßen jeweils zur Bereitstellung der Dienstleistung verwendet werden, ohne dass der temporäre Verbund zwischen der Fahrlafette, der CAB erster Ordnung und der CAB zweiter Ordnung zwischenzeitlich aufgelöst werden müsste. Insbesondere kann vorgesehen sein, dass lediglich zu Wartungs- und/oder Reparaturzwecken der temporäre Verbund zwischen der Fahrlafette und der CAB erster Ordnung bzw. der CAB erster Ordnung und der CAB zweiter Ordnung aufzulösen ist.

Wenn im Rahmen der vorliegenden Erfindung von "CAB erster Ordnung" und "CAB zweiter Ordnung" die Rede ist, so ist dem Fachmann ersichtlich, dass die absolute Stufe, auf welcher sich die vorgenannten CABs befinden, nicht wesentlich für den Kerngedanken der vorliegenden Erfindung sind. Vielmehr handelt es sich um CABs benachbarter Ebenen, wodurch nicht ausgeschlossen wird, dass CABs höherer und/oder niedrigerer Ebenen in entsprechender Weise vorgesehen sein können, um ein Servicemobil bereitzustellen.

### Bezugszeichenliste

- 1: erste CAB
- 1a: mechanische Schnittstelle der CAB
- 1b: informationstechnische/energetische Schnittstelle der CAB
- 1c: Abwasserrohr
- 2: zweite CAB
- 7: Server
- 8: Funkturm
- 10: Fahrlafette
- 10a: mechanische Schnittstelle der Fahrlafette
- 10b: energetische/informationstechnische Schnittstelle der Fahrlafette
- 10c: Schnittstelle für Abwasserrohr
- 11a: Schiene
- 12: Anwender
- 13: Serviceprovider
- 14: Micro-Service-Provider
- 20: CAB zweiter Ordnung
- 21: Spültisch
- 21a: Schiene
- 22: Tisch
- 23: Stuhl
- 24: Öffnung
- 100-700: Verfahrensschritte
- D1-D8: Dienstleistungen
- P1, P2: Pfeile

## Patentansprüche

1. Kabine, nachfolgend "CAB (1) erster Ordnung" genannt, für ein Servicemobil mit einer Fahrlafette (10), wobei die CAB (1) erster Ordnung umfasst:
- eine vordefinierte erste Schnittstelle (1a) zur reversiblen mechanischen Befestigung der CAB (1) erster Ordnung an der Fahrlafette (10),
- eine vordefinierte zweite Schnittstelle (11a) zur reversiblen mechanischen Befestigung der CAB (1) erster Ordnung an einer zweiten Kabine, nachfolgend "CAB (20) zweiter Ordnung" genannt, und
- **gekennzeichnet ist durch** eine Ausstattung (21) zur Erbringung einer ersten Dienstleistungsfamilie (D2, D5, D7) in dem Servicemobil während einer Fahrt des Servicemobils,
- wobei die CAB (20) zweiter Ordnung eine Ausstattung zur Erbringung einer ersten Dienstleistung der Dienstleistungsfamilie (D2, D5, D7) in dem Servicemobil während der Fahrt des Servicemobils bereitstellt, und
- wobei die vordefinierte erste Schnittstelle (1a) eingerichtet ist, in Verbindung mit der vordefinierten zweiten Schnittstelle (11a) eine räumliche Festlegung der CAB (20) zweiter Ordnung gegenüber der Fahrlafette (10) bereitzustellen.

2. CAB (1) erster Ordnung nach Anspruch 1, wobei die erste Schnittstelle (1a) und/oder die zweite Schnittstelle (11a) weiter zur
- Energieübertragung und/oder
- Übertragung von Betriebsmitteln und/oder
- Informationsübertragung und/oder
- Entsorgung
eingerichtet ist bzw. sind.

3. CAB (1) erster Ordnung nach Anspruch 1 oder 2, wobei die Ausstattung dienstleistungsfamilienspezifische bzw. dienstleistungsspezifische
- Werkzeuge und/oder
- Gerätschaften (21) und/oder
- Möbel (22, 23)
umfasst.

4. CAB (1) erster Ordnung nach einem der vorstehenden Ansprüche, welche einen mechanischen Verbund darstellt, welcher insbesondere durch eine digitale und/oder optische Kennung eindeutig maschinenlesbar identifizierbar ist.

5. CAB (1) erster Ordnung nach einem der vorstehenden Ansprüche, wobei die Dienstleistungsfamilie
- eine Hygienedienstleistung und/oder
- eine kosmetische Behandlung des Anwenders (12) und/oder
- eine Wellness-Behandlung des Anwenders (12)
umfasst.

6. CAB (1) erster Ordnung nach einem der vorstehenden Ansprüche, wobei die Dienstleistung
- eine UV- und/oder IR-Bestrahlung und/oder eine Bräunungsdusche und/oder
- ein Duschen und/oder
- ein Augenbrauenzupfen und/oder
- ein Frisieren und/oder
- eine Nagelpflege
des Anwenders (12) umfasst.

7. Servicemobil umfassend eine CAB (1) erster Ordnung nach einem der vorstehenden Ansprüche, welche mit einer CAB (20) zweiter Ordnung über die vordefinierte erste Schnittstelle (1a, 1c) verbunden ist und wobei die CAB (20) zweiter Ordnung ihrerseits
- eine vordefinierte dritte Schnittstelle (21a) aufweist, welche zur Verbindung mit der CAB (1) erster Ordnung mit derer vordefinierter zweiter Schnittstelle (11a) in Eingriff steht.

8. Servicemobil nach Anspruch 7, wobei die CAB (20) zweiter Ordnung einen mechanischen Verbund darstellt, welcher insbesondere durch eine digitale und/oder optische Kennung eindeutig maschinenlesbar identifizierbar ist.

9. Servicemobil nach einem der Ansprüche 7 oder 8, wobei die CAB (2) zweiter Ordnung weiter
- vierte Schnittstellen aufweist, welche eingerichtet sind, mit vordefinierten Schnittstellen einer dritten Kabine, nachfolgend "CAB dritter Ordnung" genannt, verbunden zu werden.

10. Servicemobil nach einem der Ansprüche 7 bis 9, wobei die CAB (20) zweiter Ordnung eine Öffnung (24) aufweist, an welcher Oberflächenbereiche der CAB (1) erster Ordnung angeordnet sind.

11. Servicemobil nach einem der Ansprüche 7 bis 10, wobei die CAB (20) zweiter Ordnung eingerichtet ist, das Servicemobil und insbesondere die Dienstleistung barrierefrei anzubieten.

12. Verfahren zur Bereitstellung eines Servicemobils umfassend die Schritte:
- Ermitteln (100) eines Bedarfes zur Erbringung einer Dienstleistung während einer Fahrt,
- Identifizieren (200) einer Kabine, nachfolgend "CAB (1) erster Ordnung" genannt, gemäß einem der vorstehenden Ansprüche 1 bis 6 für das Servicemobil, welche eigens zur Erbringung einer Dienstleistungsfamilie, welcher die Dienstleistung angehört, eingerichtet ist, und
- Bereitstellen (700) des Servicemobils durch temporäres Verbinden der CAB (1) erster Ordnung mit einer Fahrlafette (10).

13. Verfahren nach Anspruch 12 weiter umfassend
- Identifizieren (300) einer zweiten Kabine, nachfolgend "CAB (20) zweiter Ordnung" genannt, für das Servicemobil, welche eigens zur Erbringung der Dienstleistung eingerichtet ist, und
- Bereitstellen (700) des Servicemobils durch temporäres Verbinden der CAB (20) zweiter Ordnung mit der CAB (1) erster Ordnung.

14. Verfahren nach Anspruch 12 oder 13 weiter umfassend
- logisches Verknüpfen (400) der CAB (1) erster Ordnung und der CAB (20) zweiter Ordnung,
- automatisches Annähern (500) der CAB (1) erster Ordnung und der CAB (20) zweiter Ordnung und/oder
- automatisches Anordnen (600) der CAB (20) zweiter Ordnung in der CAB (1) erster Ordnung.

## Claims

1. Cabin, hereafter referred to as "first-order CAB (1)," for a service mobile with a vehicle mount (10), wherein the first-order CAB (1) comprises:
- a predefined first interface (1a) for reversible mechanical attachment of the first-order CAB (1) to the vehicle mount (10),
- a predefined second interface (11a) for reversible mechanical attachment of the first-order CAB (1) to a second cabin, hereafter referred to as "second-order CAB (20)," and
- is **characterized by** equipment (21) for providing a first family of services (D2, D5, D7) in the service mobile while the service mobile is traveling,
- wherein the second-order CAB (20) provides equipment for providing a first service of the family of services (D2, D5, D7) in the service mobile while the service mobile is traveling, and
- wherein the predefined first interface (1a) is configured to provide, in conjunction with the predefined second interface (11a), a spatial determination of the second-order CAB (20) relative to the vehicle mount (10).

2. First-order CAB (1) according to claim 1, wherein the first interface (1a) and/or the second interface (11a) is or are further configured for
- energy transmission and/or
- transmission of resources and/or
- transmission of information and/or
- waste disposal.

3. First-order CAB (1) according to claim 1 or 2, wherein the equipment comprises
- tools and/or
- instruments (21) and/or
- furniture (22, 23)
that are specific to the family of services or specific to the service.

4. First-order CAB (1) according to one of the preceding claims, which represents a mechanical combination which can be uniquely identified in a machine-readable manner - in particular, via a digital and/or optical identifier.

5. First-order CAB (1) according to one of the preceding claims, wherein the family of services comprises
- a hygiene service and/or
- a cosmetic treatment of the user (12) and/or
- a wellness treatment of the user (12).

6. First-order CAB (1) according to one of the preceding claims, wherein the service comprises
- a UV and/or IR exposure and/or a tanning spray and/or
- a shower and/or
- an eyebrow plucking and/or
- a hair styling and/or
- a nail care
of the user (12).

7. Service mobile comprising a first-order CAB (1) according to one of the preceding claims, which is connected to a second-order CAB (20) via the predefined first interface (1a, 1c), and wherein the second-order CAB (20) in turn
- has a predefined third interface (21a) which, for connection to the first-order CAB (1), engages with its predefined second interface (11a).

8. Service mobile according to claim 7, wherein the second-order CAB (20) represents a mechanical combination which can be uniquely identified in a machine-readable manner - in particular, via a digital and/or optical identifier.

9. Service mobile according to one of claims 7 or 8, wherein the second-order CAB (2) furthermore
- has fourth interfaces that are configured to be connected to predefined interfaces of a third cabin, hereafter referred to as "third-order CAB."

10. Service mobile according to one of claims 7 through 9, wherein the second-order CAB (20) has an opening (24) at which surface regions of the first-order CAB (1) are arranged.

11. Service mobile according to one of claims 7 through 10, wherein the second-order CAB (20) is configured to provide the service mobile, and, in particular, the service, without a barrier.

12. Method for providing a service mobile, comprising the steps of:
- determining (100) a need for providing a service during a travel,
- identifying (200) a cabin, hereafter referred to as "first-order CAB (1)," according to one of the preceding claims 1 through 6 for the service mobile which is specifically configured to provide a family of services to which the service belongs, and
- providing (700) the service mobile by temporarily connecting the first-order CAB (1) to a vehicle mount (10).

13. Method according to claim 12, further comprising
- identifying (300) a second cabin, hereafter referred to as "second-order CAB (20)," for the service mobile which is specifically configured to provide the service, and
- providing (700) the service mobile by temporarily connecting the second-order CAB (20) to the first-order CAB (1).

14. Method according to claim 12 or 13, further comprising
- logical linkage (400) of the first-order CAB (1) and the second-order CAB (20),
- automated approach (500) of the first-order CAB (1) and the second-order CAB (20), and/or
- automatic arrangement (600) of the second-order CAB (20) in the first-order CAB (1).

## Revendications

1. Cabine, nommée ci-après « CAB (1) de premier ordre », pour un véhicule de service comportant un affût (10), la CAB (1) de premier ordre comprenant :
- une première interface (1a) prédéfinie destinée à la fixation mécanique réversible de la CAB (1) de premier ordre à l'affût (10),
- une deuxième interface (11a) prédéfinie destinée à la fixation mécanique réversible de la CAB (1) de premier ordre à une deuxième cabine, nommée ci-après « CAB (20) de deuxième ordre », et
- étant **caractérisée par** un équipement (21) destiné à offrir une première famille de prestations (D2, D5, D7) dans le véhicule de service pendant un trajet du véhicule de service,
- la CAB (20) de deuxième ordre fournissant un équipement destiné à offrir une première prestation de la famille de prestations (D2, D5, D7) dans le véhicule de service pendant le trajet du véhicule de service, et
- la première interface (1a) prédéfinie étant conçue pour, en combinaison avec la deuxième interface (11a) prédéfinie, fournir une fixation spatiale de la CAB (20) de deuxième ordre par rapport à l'affût (10).

2. CAB (1) de premier ordre selon la revendication 1, dans laquelle la première interface (1a) et/ou la deuxième interface (11a) est conçue ou sont en outre conçues pour
- la transmission d'énergie et/ou
- la transmission de moyens d'exploitation et/ou
- la transmission d'informations et/ou
- l'élimination

3. CAB (1) de premier ordre selon la revendication 1 ou 2, dans laquelle l'équipement comprend
- des outils et/ou
- du matériel (21) et/ou
- des meubles (22, 23)
spécifiques de la famille de prestations ou spécifiques de la prestation.

4. CAB (1) de premier ordre selon l'une quelconque des revendications précédentes, qui constitue un ensemble mécanique, qui peut en particulier être clairement identifié de manière lisible par une machine grâce à un identifiant numérique et/ou optique.

5. CAB (1) de premier ordre selon l'une quelconque des revendications précédentes, dans laquelle la famille de prestations comprend
- une prestation relative à l'hygiène et/ou
- un traitement cosmétique de l'utilisateur (12) et/ou
- un traitement de bien-être de l'utilisateur (12)
spécifiques de la famille de prestations ou spécifiques de la prestation.

6. CAB (1) de premier ordre selon l'une quelconque des revendications précédentes, dans laquelle la prestation comprend
- une exposition aux rayons UV et/ou IR et/ou une douche autobronzante et/ou
- une douche et/ou
- une épilation des sourcils et/ou
- une coiffure et/ou
- un soin des ongles
de l'utilisateur (12).

7. Véhicule de service comprenant une CAB (1) de premier ordre selon l'une quelconque des revendications précédentes, qui est reliée à une CAB (20) de deuxième ordre par le biais de la première interface (1a, 1c) prédéfinie et dans lequel la CAB (20) de deuxième ordre comporte de son côté
- une troisième interface (21a) prédéfinie, qui, pour la liaison avec la CAB (1) de premier ordre, est en prise avec la deuxième interface (11a) prédéfinie de celle-ci.

8. Véhicule de service selon la revendication 7, dans lequel la CAB (1) de deuxième ordre constitue un ensemble mécanique, qui peut en particulier être clairement identifié de manière lisible par une machine grâce à un identifiant numérique et/ou optique.

9. Véhicule de service selon l'une quelconque des revendications 7 ou 8, dans lequel la CAB (2) de deuxième ordre comporte en outre
- des quatrièmes interfaces, qui sont conçues pour être reliées à des interfaces prédéfinies d'une troisième cabine, nommée ci-après « CAB de troisième ordre ».

10. Véhicule de service selon l'une quelconque des revendications 7 à 9, dans lequel la CAB (20) de deuxième ordre comporte une ouverture (24) au niveau de laquelle sont agencées des zones de surface de la CAB (1) de premier ordre.

11. Véhicule de service selon l'une quelconque des revendications 7 à 10, dans lequel la CAB (20) de deuxième ordre est conçue pour proposer le véhicule de service et en particulier la prestation de manière accessible à tous.

12. Procédé de fourniture d'un véhicule de service comprenant les étapes suivantes :
- détermination (100) d'un besoin relatif à l'offre d'une prestation pendant un trajet,
- identification (200) d'une cabine, nommée ci-après « CAB (1) de premier ordre », selon l'une quelconque des revendications 1 à 6, pour le véhicule de service, qui est spécialement conçue pour offrir une famille de prestations à laquelle appartient la prestation, et
- fourniture (700) du véhicule de service par liaison temporaire de la CAB (1) de premier ordre à un affût (10).

13. Procédé selon la revendication 12, comprenant en outre
- l'identification (300) d'une deuxième cabine, nommée ci-après « CAB (20) de deuxième ordre », pour le véhicule de service, qui est spécialement conçue pour offrir la prestation, et
- la fourniture (700) du véhicule de service par liaison temporaire de la CAB (20) de deuxième ordre à la CAB (1) de premier ordre.

14. Procédé selon la revendication 12 ou 13, comprenant en outre
- la connexion logique (400) de la CAB (1) de premier ordre et de la CAB (20) de deuxième ordre,
- le rapprochement automatique (500) de la CAB (1) de premier ordre et de la CAB (20) de deuxième ordre et/ou
- l'agencement automatique (600) de la CAB (20) de deuxième ordre dans la CAB (1) de premier ordre.
